# EUROPEAN PATENT APPLICATION

(11) **EP 2 546 575 A2**
(43) Date of publication of application: **16.01.2013**
(21) Application number: 12176010.2
(22) Date of filing: 11.07.2012
(51) Int. Cl.: F23R 3/46, F23R 3/28, F23K 5/20, F02C 7/224

(54) **Systems and methods for bulk temperature variation reduction of a gas turbine through can-to-can fuel temperature modulation**

(30) Priority: 14.07.2011 US 201113182956
(71) Applicant: General Electric Company, Schenectady, NY 12345 (US)
(72) Inventor: Romig, Bryan Wesley, Greenville, SC South Carolina 29615 (US); Ziminsky, Willy Steve, Greenville, SC South Carolina 29615 (US); Simons, Derrick Walter, Greenville, SC South Carolina 29615 (US)
(74) Representative: Cleary, Fidelma

(57) **Abstract**

A gas turbine (10) includes a plurality of combustion chambers (14); at least one fuel nozzle (16, 18, 20) for each of the combustion chambers; at least one fuel line (34, 36, 38) for each fuel nozzle in each of the combustion chambers; at least one heat exchanger (28, 30, 32) for each fuel line configured to adjust a temperature of a fuel flow to each fuel nozzle; and a controller (50) configured to control each of the heat exchangers to reduce temperature variations amongst the combustion chambers.

## Description

The invention relates to systems and methods for bulk temperature variation reduction of a gas turbine through can-to-can fuel temperature modulation.

### BACKGROUND OF THE INVENTION

Combustors in industrial gas turbines have a plurality of combustion chambers arranged around a turbine casing. High pressure air from the compressor flows into the chambers where the air is mixed with fuel. Fuel is injected into the chambers through nozzles. Hot gases generated by the combustion of the air and fuel mixture flow from the combustion chambers into the turbines which generally include a highpressure turbine to drive the compressor and a low-pressure turbine to provide output power.

Each combustion chamber defines a generally cylindrical combustion zone. Upstream of the combustion zone, the chambers each have a plurality of fuel nozzles that inject fuel into the zone. Fuel flow to each nozzle (or group of nozzles) is regulated by a valve. Adjusting the valve provides a degree of precise control of the amount of fuel flowing to each fuel nozzle in each combustion chamber. Valves may be used to tune fuel flow to each combustion chamber in a gas turbine such that combustor pressure oscillations, nitrous oxides, carbon monoxide, and unburned hydrocarbons are minimized. A prior fuel valve system is disclosed in published U.S. Patent Application Publication 2003/0144787 A1.

Fuel valves are commonly used to adjust the fuel entering each nozzle of a combustion chamber in a multi-chamber combustor of an industrial gas turbine. Generally, valves are used to optimize the mixture of fuel and combustion air entering each combustion chamber such that the combustion of the air-fuel mixture minimizes the production of nitrous oxides (NOx), carbon monoxide (CO) and unburned hydrocarbons (UHC). To minimize CO and UHC and achieve overall greater efficiency, it is desirable to increase the combustion temperature within the gas turbine. However, the oxidation of NOx in gas turbines increases dramatically with the increase in combustion temperatures.

Fuel valves provide for adjustment of the fuel flow to individual nozzles and combustion chambers to compensate for the variations in the fuel-to-air ratio to each chamber. Setting the air-fuel ratio often involves a careful balance between: (1) increasing gas turbine efficiency and/or minimizing unburned hydrocarbons carbon monoxide (UHC) and carbon monoxide (CO) by increasing combustion temperature and (2) decreasing the combustion temperature to minimize nitric oxides (NOx) by thinning the air-fuel ratio. It is extraordinarily difficult to achieve uniform temperature and pressure distributions in the multiple combustion chambers of an industrial gas turbine. Variations in the airflow between the combustion chambers make it difficult to maintain a constant air-fuel ratio in all combustion chambers. CO emissions tend to be more sensitive to fuel-to-air ratio variations from chamber to chamber than are NOx emissions. Tuning airflow to individual combustion chambers may be applied to reduce the overall level of CO emissions while maintaining satisfactory gas turbine operation.

Can-to-can bulk temperature variation is common in gas turbines and can lead to variation in emissions and dynamics between cans (combustors). Currently this temperature variation is modulated through the use of mechanical tuning valves, which are expensive and can fail to activate. In addition, the driving linkages of the valves can often bind during operation of the valves. Once the valves are "tuned" they cannot be easily actuated due to their setup. Such a valve system is disclosed in, for example, U.S. Patent 7,269,939.

Due to variations in part dimensions, assembly fit-ups, etc., each can in a gas turbine may receive differing amounts of air from the compressor. It is possible to change the can-to-can distribution of fuel, such that some cans receive more fuel and some cans receive less fuel. This can serve to modulate, or even out, the bulk temperatures across the multiple cans in a gas turbine, by giving the cans that receive more air, more fuel and the cans that receive less air, less fuel, thus evening out the fuel/air ratio across the cans.

### BRIEF DESCRIPTION OF THE INVENTION

According to a first aspect, the present invention resides in a gas turbine comprising a plurality of combustion chambers; at least one fuel nozzle for each of the combustion chambers; at least one fuel line for each fuel nozzle in each of the combustion chambers; at least one heat exchanger for each fuel line configured to adjust a temperature and an amount of a fuel flow to each fuel nozzle; and a controller configured to control each of the heat exchangers to reduce temperature variations amongst the combustion chambers.

According to another aspect, the invention resides in a method of controlling fuel flow to individual combustion chambers of a gas turbine comprising measuring exhaust gas temperatures and/or emission levels at a plurality of exhaust regions of the gas turbine; correlating one of the measured exhaust gas temperatures and/or emission levels to fuel flow to individual combustion chambers; and adjusting a temperature of the fuel flow to each individual combustion chamber to reduce a temperature level variation and/ or an emission level variation of each combustion chamber from an average temperature level and/or an average emission level.

### BRIEF DESCRIPTION OF THE DRAWINGS

Embodiments of the present invention will now be described, by way of example only, with reference to the accompanying drawings in which:
FIG. 1 is a schematic side view of combustion chambers in a gas turbine showing including an exemplary system for reducing bulk temperature variations;
FIG. 2 is a flow chart of an exemplary method for reducing bulk temperature variations;
FIG. 3 is a flow chart of another exemplary method for reducing bulk temperature variations; and
FIG. 4 is a flow chart of still another exemplary method for reducing bulk temperature variations.

### DETAILED DESCRIPTION OF THE INVENTION

A system and method has been developed for tuning a gas turbine to increase its efficiency. In general, an efficient gas turbine is one which has the least nitrous oxides, the least amount of unburned hydrocarbons, and the least amount of carbon monoxide for a specified energy output. To tune the gas turbine, it is desirable that the fuel flow to each combustion chamber in the gas turbine be well balanced relative to the remaining combustion chambers.

The system and method tunes each of the multiple combustion chambers such that no specific combustion chamber has a rich or lean air-fuel mixture ratio. The air-fuel mixture in each chamber may be within about one percent (1%) of the remaining combustion chambers. The chambers are tuned such that the air-fuel mixture for each chamber is moved towards an average air-fuel mixture for all combustion chambers.

Each nozzle of each combustion chamber may have its own heat exchanger to control the temperature, and thus the amount of, fuel flowing to the nozzles by changing the density of the fuel. To minimize the pressure drop multiple manifolds may be employed. Each manifold supplies fuel or purge gases to at least one fuel nozzle in each of the multiple combustion chambers of the combustor.

In one method, the gas turbine is tuned based on the temperature distribution in the exhaust gases. The temperatures at various points around the turbine exhaust are correlated to each combustion chamber by a swirl chart that relates each combustion chamber to an exhaust region at a specified fuel load. The swirl chart and exhaust temperatures are used to identify whether each of the combustion chambers is operating rich, lean, or average. The chambers are tuned by increasing the fuel load to each of said combustion chambers identified as lean and decreasing the fuel load to each of the combustion chambers identified as rich. The fuel load to each chamber is adjusted by controlling the heat exchangers for each combustion chamber. The tuning process is repeated until the exhaust temperature of all of the combustion chambers is within, for example, about 1% of the average exhaust temperature. This process of minimizing variations in the exhaust temperature minimizes variations between each combustion chamber.

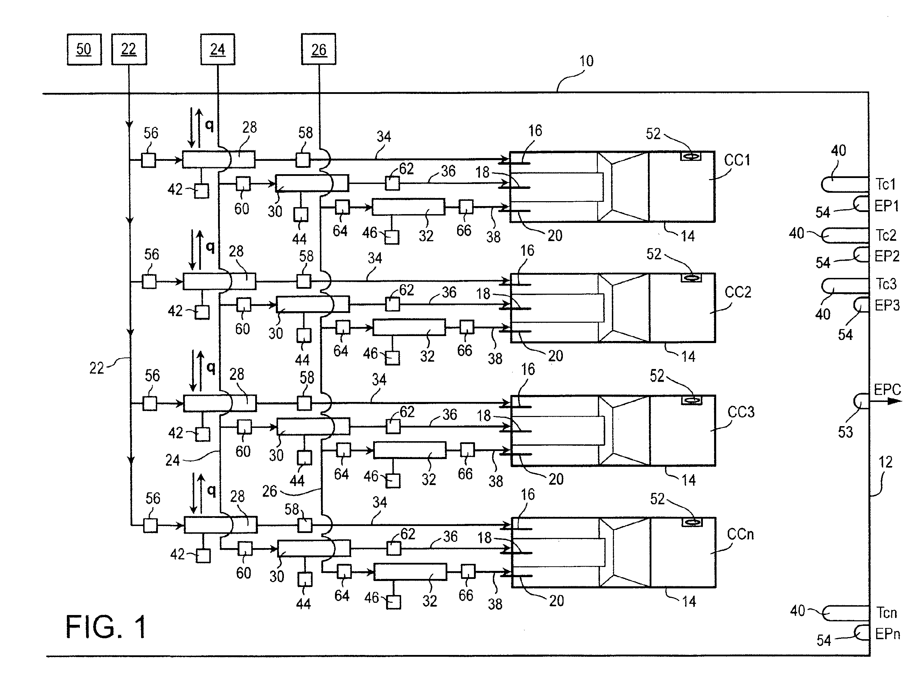

FIG. 1 shows a schematic partial cross-sectional view of a gas turbine 10. Gas turbines, especially industrial gas turbines, have multiple combustion chambers, or cans, 14 and within each combustion chamber are multiple fuel nozzles 16, 18, 20. Each nozzle 16, 18, 20 has its own heat exchanger 28, 30, 32 to control the temperature, and thus the amount of, fuel flowing to the nozzles. To minimize the pressure drop through the heat exchangers, multiple fuel manifolds 22, 24, 26 may be provided. Each manifold 22, 24, 26 typically supplies fuel to at least one fuel nozzle 16, 18, 20 in each of the multiple combustion chambers 14. The manifolds 22, 24, 26 may be arranged as shown in, for example, U.S. Patent 7,269,939.

The manifolds 22, 24, 26 may have a configuration as disclosed in, for example, U.S.

Patent 7,269,939. Fuel supply lines 34, 36, 38 may extend from the manifolds 22, 24, 26, respectively, to the fuel nozzles 16, 18, 20, respectively, of the combustion chambers 14. Heat exchangers 28, 30, 32 add or remove heat q from fuel supplied to the fuel lines 34, 36, 38, respectively, to modulate the temperature, and thus the amount, of fuel supplied to the fuel nozzles 16, 18, 20, respectively. The heat exchanger 16, 18, 20 may be, for example, electric heaters. The heat exchangers may also be a combination of a heater and a cooling unit.

Inlet thermocouples 56, 60, 64 may be provided to sense the temperature of the fuel prior to the heat exchangers 28, 30, 32, respectively, and outlet thermocouples 58, 62, 66 may be provided to sense the temperature of the fuel after the heat exchangers 28, 30, 32, respectively. The temperatures sensed by the thermocouples may be provided to a controller 50 that is configured to control a plurality of heat exchanger controllers 42, 44, 46. The controller 50 controls the heat exchanger controllers 42, 44, 46 to modulate the heat input to or output from the fuel to achieve a desired fuel outlet temperature. Differentially heating/cooling the fuel in the fuel lines 34, 36, 38 changes the can-to-can distribution of fuel, so that some cans get more fuel and some cans get less fuel, which evens out the bulk temperatures across the multiple cans 14 in the gas turbine 10.

FIG. 1 does not show the air compressor or details about the supply of combustion air to the gas turbine as these details are known and conventional in the art. The turbine exhaust outlet 12 of the gas turbine is downstream of the combustion chambers 14 and associated turbine. The multiple combustion chambers, or cans, 14 are shown as combustion chamber number 1 (CC1), combustion chamber number 2 (CC2), combustion chamber number 3 (CC3), and so on around the gas turbine casing to an nth combustion chamber (CCn). Depending on the energy output desired for the gas turbine 10, the number of combustion chambers 14 varies. A typical industrial gas turbine may have ten to fourteen combustion chambers arranged in an annular array around a turbine casing.

At the exhaust outlet 12 of the gas turbine 10 are multiple thermocouples 40 arranged about the periphery of the gas turbine 10. The number of thermocouples (Tc1, Tc2, Tc3 ... Tcn) may vary. For an industrial gas turbine having ten to fourteen combustion chambers, eighteen to twenty-seven thermocouples may be arranged in a circular array (and possibly concentric circular arrays). The number of combustion chambers, manifolds, nozzles and thermocouples can vary depending on the desired energy output from the gas turbine. The dynamic pressure level in each of the combustion chambers may be monitored by dynamic pressure sensors 52. Also included in the periphery of the gas turbine 10 are emission sensor ports (EP1, EP2, EP3 ... EPn) 54 distributed around the circumference of the exhaust turbine stream. At least one emission sensor port (EPC) 53 that measures the overall emissions from the entire exhaust stream may also be provided.

Each combustion chamber 14 has multiple fuel nozzles 16, 18 and 20 for supplying fuel to the combustion chamber. The number of fuel nozzles and their placement within each combustion chamber 14 may vary. Generally, sufficient fuel nozzles are employed to obtain a uniform flow of fuel and air across each combustion chamber. Multiple manifolds 22, 24, 26 supply each fuel nozzle 16, 18, and 20 with fuel, respectively. Multiple manifolds are employed to minimize the pressure drop from the manifold to the fuel nozzle. The number of manifolds employed may vary. It should also be appreciated that the fuel may be supplied to the nozzles 16, 18, 20 of the combustion chambers 14 without the use of manifolds.

The heat exchangers 28, 30, 32 may be directly coupled with the manifolds 20, 24, 26, and with the associated fuel nozzles 16, 18, 20 in each combustion chamber 14. The heat exchangers control the amount of fuel flowing from the manifolds to the fuel nozzles. Each manifold may connect to each associated heat exchanger, or alternatively, each manifold may connect to less than all the associated heat exchangers. The number of manifolds and connections to the heat exchangers is dependent on piping space in and around the gas turbine as well as the pressure drop through the heat exchangers. Multiple supply lines couple each fuel nozzle to the heat exchanger. Likewise, each supply line couples each fuel nozzle with its corresponding and associated heat exchanger. Each supply line couples each fuel nozzle to the heat exchanger, which is fluidly connected with the manifold. The cost of multiple manifolds may be balanced against an excessive pressure drop as the fuel flows from the manifold through the heat exchanger, through each supply line to the fuel nozzles in each combustion chamber. If too many heat exchangers and associated fuel nozzles stem from a manifold, the pressure drops across each heat exchanger may not be consistent with drops across other heat exchangers.

The fuel manifolds may, for example, be a primary fuel manifold 24, a transfer manifold 22 and a secondary fuel manifold 26. However, one of the manifolds may provide transfer gas to purge the nozzles and fuel lines during transitions from one fuel to another. The manifolds may each be sized corresponding to the fuel or transfer gas that they carry. For example, the primary manifold 22 may be a larger size than the secondary fuel manifold 26.

The manifolds 22, 24, 26 each support a respective array of individual fuel supply lines 34, 36, 38. The primary fuel manifold 24 includes an annular array of primary fuel supply lines 36 that each extend towards and couples to a respective primary (e.g. center) fuel nozzle 18 of a combustion chamber 14. Similarly, the secondary fuel manifold 26 includes an annular array of second fuel supply lines 38 that each also extend towards and connect to a respective secondary fuel nozzle 20 of the combustion chamber 14. The transfer manifold 22 may typically be filled with compressor discharge purge gas at high temperatures except while the combustion operation is being transitioned from one operating mode to another. During transition, purge gas from the transfer manifold 22 is passed through the fuel nozzles 16 to purge fuel from the nozzles before the nozzles are either closed off or transitioned to another fuel.

The control system 50 may be a computer or microprocessor system that executes heat exchanger control algorithms based on certain inputs, such as fuel mode, exhaust gas temperature annular distribution and dynamic pressure in the combustion chambers.

The control system 50 transmits control signals to the heat exchanger controllers 42, 44, 46 to adjust the heat exchangers 28, 30, 32. The control system may operate in accordance with executable algorithms stored in the computer controller 50. The control system may also receive exhaust temperature data from temperature sensor thermocouples 40 in the exhaust, from dynamic pressure sensors 52 in the combustion chambers, emissions data (EP1 to EPn and EPC) collected from emission sensors 54 in the gas turbine exhaust, gas fuel pressure data from the manifolds and other data regarding the operating conditions of the gas turbine.

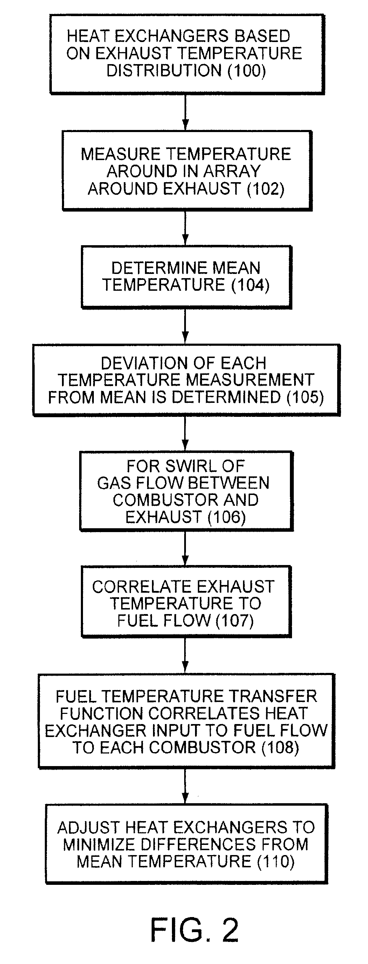

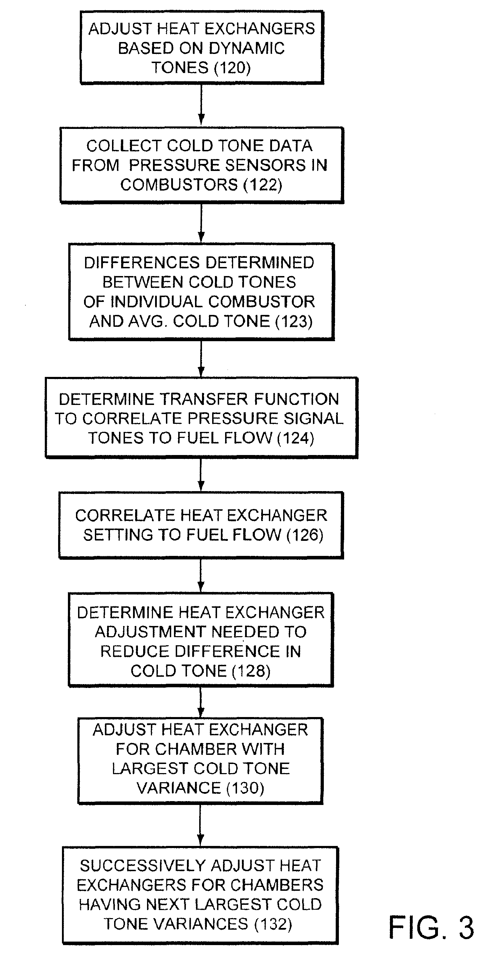

FIGS. 2 to 4 are flow charts of three methods for automatically modulating the temperature of the fuel in the primary and secondary fuel lines to the nozzles in each combustion chamber in a gas turbine. These exemplary tuning algorithms allow for precise control of the heat exchangers based on gas turbine operating parameters.

In the first method 100, the temperature data collected from the thermocouples 40 provides data for a thermal annular temperature profile map of the exhaust gas temperatures. By adjusting for the swirl angle of the gases, the angular positions on the thermal map can be correlated to individual combustion chambers, in a manner described in U.S. Patent 6,460,346. The thermal map may be, for example, a polar chart showing exhaust temperature distributions in the exhaust gas corrected for the swirl angle in the gas turbine. If the polar chart of temperatures shows a relatively circular temperature distribution, the combustion chambers may be assumed to be operating at uniform combustion temperatures. A non-circular temperature chart may indicate significant temperature variations in the combustion temperatures of the chambers.

The swirl chart indicates the angle between any combustion chamber and the point where the exhaust from the combustion chamber crosses the outlet 12 of the gas turbine 10. In a typical swirl chart, gas turbine power output is shown as a percent (0 to 100%) of the turbine's rated power output capacity, e.g., the turbines nameplate capacity, versus various swirl angles in degrees (1° to 90°). At low power outputs, the swirl angle is large because the residence time of the combustion gases from the combustor to the turbine exhaust is relatively long, e.g., one second. At high output where the fuel/air volume is high, the angle is low because the combustion gases having a relatively short residence time of, for example, 0.1 seconds. A swirl chart showing the rotation of the turbine flows at many different percentages of nameplate capacity may be used to correlate exhaust conditions to combustion chambers. This correlation aids in tuning the gas turbine 10 at any specified level e.g., between 50% to 100% of nameplate capacity) and in tuning each combustion chamber so that variations between combustion chambers is minimized. Once the swirl data is determined, the controller 50 is employed to efficiently run the gas turbine at any percentage level of nameplate capacity.

The swirl chart relates a specified combustion chamber to a position in an exhaust temperature profile at various specified fuel loads. To generate a swirl chart, the heat exchangers may be initially set at an initial setting, for example to raise the temperature of the fuel by a predetermined amount. A heat exchanger of a single combustion chamber is adjusted to increase or decrease the fuel flow to create a "hot spot" in that one combustion chamber. The hot spot in the combustion chamber should create a corresponding hot spot in the exhaust temperature profile. The data from the exhaust thermocouple(s) 40 will indicate a high temperature at some region in the exhaust. That exhaust region will correspond to the combustion chamber with the "hot spot" for the percentage of rate load at which the gas turbine is operating. By increasing and decreasing the percentage of rated load of the gas turbine, the charging position in the exhaust region of the combustion chamber hot spot can be tracked for the different load percentages. The swirl chart can be created from the data regarding the hot spot combustion chamber and the exhaust temperature data at various loads of the gas turbine. The swirl chart can also be constructed by creating a "cold spot" in the gas turbine by decreasing flow to a combustion chamber(s) using the heat exchanger controlling flow to that combustion chamber.

The controller 50 controls the controllers 42, 44, 46 of the heat exchangers 28, 30, 32 on the fuel supply to the fuel nozzles 16, 18, 20 on the individual chambers to, for example, cause the combustion temperatures in the combustion chambers to become more uniform. This process of adjusting the heat exchangers is automated by the controller 50 that receives data from the thermocouples 40, determines whether the data indicates excessive variations in the combustion temperature distribution in the combustion chambers, controls appropriate heat exchangers to adjust the fuel flow to selected combustion chambers, and confirms that the new exhaust gas temperature data indicates a more uniform temperature distribution.

To determine the magnitude of the fuel temperature adjustment required for correcting the exhaust temperature variation, the following calculations may be performed. In step 102, the temperature data values (TX1, TX2, ... TXn) are collected representing the swirl-corrected exhaust temperatures corresponding to each of the combustion chambers in the gas turbine. In step 104, the mean (Tmean) of the exhaust temperatures is computed. The deviation (TX1Δ, TX2Δ,... TXnΔ) of each exhaust temperature from the reference mean for each combustion chamber is determined, in step 105. The temperature data values are adjusted for the swirl of the gas flow from the combustion chamber to the exhaust, in step 106. In this way, the exhaust temperature valves are matched with their combustion chambers that most influence the temperature at each of the temperature sensors (TX1, TX2,... TXn).

In step 107, from a thermodynamic model of the operation of the gas turbine, a transfer function ("FTC") is determined that relates the fuel flow rate in a combustion chamber to its corresponding exhaust temperature. An exemplary mathematical equation for correlating exhaust temperature to fuel flow is as follows: TX (Exhaust)=FTC (fuel flow rate for each combustion chamber, air flow rate, ... other machine operating parameters).

The transfer function (FTC) models the dependence of the exhaust temperature (TX(Exhaust)) on fuel flow in a combustor chamber. From the transfer function (FTC), a relationship can be derived that indicates the amount of fuel flow rate adjustment needed to affect a desired change in exhaust temperature (TX(Exhaust)). From a knowledge of the flow characteristics and a computational model of the gas fuel flow in the manifolds, determine the fuel temperature transfer function (g) where fuel temperature (in each fuel line)=g (FV1, FV2, ... FVn) in step 108. FV1, FV2,.. . FVn describes the heat q input into or removed from the fuel for each combustor CC1, CC2,... CCn, where "n" is the total number of combustors.

From the exhaust temperature transfer function ("FTC") and the fuel temperature adjustment transfer function (g), the controller 50 determines the magnitude of the change in the fuel temperature, as determined by the inlet and outlet thermocouples 56, 60, 64 and 58, 62, 66, to adjust for the deviation of the exhaust temperature of any one combustion chamber from the average, in step 110. The deviation of the exhaust temperature for one combustion chamber may be represented by a temperature variation (Tv) for that chamber. Tv is equal to (Teccx-Tgt)/Tgt, where Teccx is a temperature of the exhaust of a particular chamber, and Tgt is an average or mean exhaust temperature of the gas turbine. If Tv is positive, the combustion chamber is deemed to be operating with a relatively rich air-fuel mixture and the heat exchanger for that chamber should be adjusted to reduce the fuel flow rate. If Tv is negative, the combustion chamber is deemed to be operating with a relatively lean air-fuel mixture and the heat exchanger for that chamber should be adjusted to increase the fuel flow rate. A nominal value for Tv, e.g., one percent or less, indicates that the combustion chamber is operating at or very near the mean or average air-fuel mixture for all combustion chambers. The controller 50 minimizes Tv by adjusting the heat exchangers for the combustion chamber corresponding to Tv. The controller 50 sends control signals to the appropriate heat exchanger controllers 42, 44, 46 to adjust the heat exchangers based on the magnitude in the change of fuel temperature determined in step 110. The controller may minimize Tv for all of the combustion chambers in an iterative and sequential manner, such as by identifying combustion chambers with the largest Tv and first adjusting the heat exchangers of those combustion chambers.

The process of classifying the air-fuel mixture in one or more of the combustion chambers 14 as rich or lean may be facilitated by monitoring the exhaust thermocouple data as the gas turbine is, for example, slowly unloaded from 100% rated load capacity to 50% of the rated load capacity. Combustion chambers that are operating relatively rich or lean can be identified using the exhaust temperature data over a range of gas turbine operating loads. The combustion chambers operating rich (as evident from a hot spot corresponding to those chambers in the exhaust temperature profile over a range of loads) may be modulated by decreasing the fuel load via the heat exchangers and thereby dropping the temperature of the hot spot(s) in the exhaust temperature toward an average exhaust temperature. The lean combustion chambers (having corresponding "cold spots" in the exhaust temperature profiles) are similarly tuned by increasing their fuel load. This tuning process of collecting temperature data at one or more load settings of the gas turbines, identifying cold and hot spots in the exhaust temperature profile and adjusting the heat exchangers for those combustion chambers corresponding to the cold and hot spots in the exhaust profile may be carried out incrementally and iteratively to minimize excessive variations in the exhaust temperature profile.

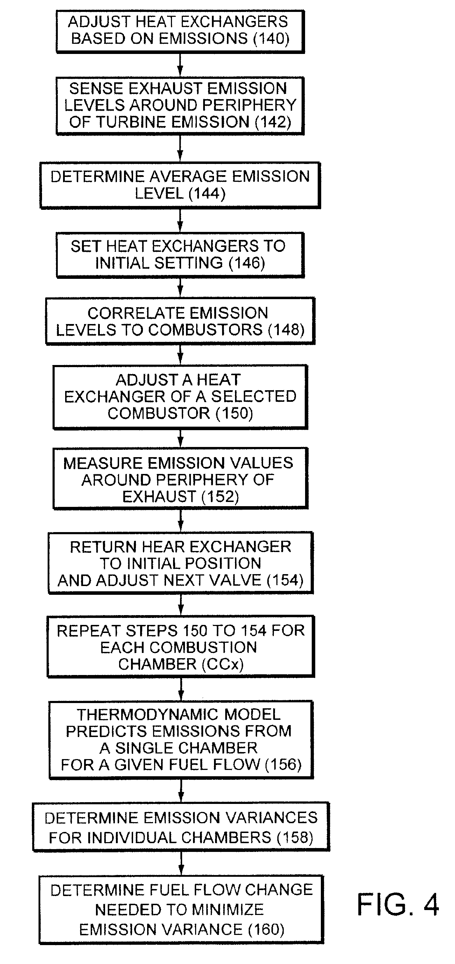

FIG. 4 is a flow chart of a second method 120, in which the combustor dynamic cold tones are obtained from the dynamic pressure sensor 52 in each combustor. The dynamic tones are an indicator for the chamber-to-chamber variation in fuel flow and fuel splits. The impact of fuel flow and split variations on the overall CO emissions can be sensed from measurements of the amplitude of the combustor "cold tone". The "cold tone" refers to a combustion chamber oscillation frequency whose amplitude increases as the combustion chamber firing temperature decreases.

In step 122, data is collected from each of the pressure sensors. CT1, CT2, ... CTn represent a time-averaged amplitude, e.g., over 5 minutes, of the cold tone as measured from each of the pressure sensors 54 in each of the combustion chambers in the gas turbine. The cold tone is a frequency that corresponds to a combustion chamber operating cooler than other chambers. Exemplary cold tones are in a frequency range of 70 hertz (Hz) to 120 Hz. Determinations are made of the mean cold tone amplitude value (CTmean) and of the differences between the mean and the measured cold tones in each combustion chamber, in step 123.

From a thermodynamic model of the operation of the gas turbine and the combustion chamber, a transfer function ("FDYN") is determined that exponentially relates the fuel flow rate in a combustion chamber to its corresponding cold tone amplitude, in step 124. The cold tone (CT (amplitude)) may be modeled by the following transfer function: FDYN (fuel flow rate, air flow rate and other machine operating parameters). FDYN is typically of the form FDYN=A exp (-k*fuel flow rate), where A and k are positive constants. The fuel flow rate for a desired cold tone amplitude (CT (amplitude)) can be derived from the FDYN transfer function. By using the FDYN transfer function, a knowledge of the fuel flow characteristics and a computational model of the gas fuel flow in the manifolds, a fuel temperature transfer function "g" is derived, in step 126. For example, fuel temperature (FV1, FV2, ... FVn), where FV1, FV2.... FVn describes the heat q input into or removed from the fuel for each combustion chamber CC1, CC2, ... CCn, and n is the total number of combustion chambers.

From the cold tone amplitude transfer function "FDYN" and the fuel temperature transfer function "g", the controller 50 can determine the magnitude of the change in the heat q to adjust for the deviation of the cold tone amplitude of any one combustion chamber from the average or mean cold tone, in step 128. The controller 50 signals the heat exchanger controllers 42, 44, 46 to make the appropriate changes to the heat exchanger settings to reduce deviations in the cold tone from the mean cold tone. Based on the measured cold tones, the combustion chambers with the greatest deviations, i.e., the outlying combustion chambers, in cold tones from the time-averaged cold tone may be first adjusted in step 130. Next, the heat exchangers on each outlying combustion chamber is adjusted to minimize the combustion chamber pressure oscillations for each outlying combustion chamber in step 132.

FIG. 5 is a flowchart of a method 140 using exhaust stack CO emission to tune a gas turbine. The carbon monoxide (CO) emissions in the turbine exhaust are measured by emission sensors at the circumferential emission sensor ports EP₁, EP₂,... EPₙ arranged around the periphery of the exhaust, in step 142. These emission sensors provide data on the CO emission distribution in the combustion chambers in a similar manner to the temperature distribution in the chambers is obtained from temperature sensors in the exhaust. The exhaust stack-average emission sensor port EPC in the exhaust stream provides data on an average emission level, in step 144. Alternatively, the average emission level may be a mathematical average or mean emission level as measured by all of the emission sensor ports (EP₁ to EPₙ). The difference between the emission level as measured by each individual circumferential sensor port and the emission average provides a measure of the chamber-to-chamber fuel flow variations in the gas turbine.

In step 146, the heat exchangers may be set to an initial setting. In step 148, the CO emission data is collected from sensors EP₁ to EPₙ; where n is the number of circumferential emission sensors in the exhaust stream. Let CO1(ref), CO2(ref) ... COn(ref) be the measurements obtained from the emission sensors EP₁ to EPₙ. CO_Stack (ref) is a value that represents the measured values of the CO emissions from the stack-average CO (as measured by EPC) with the heat exchangers in the initial setting.

In step 150, a fuel temperature change of a known magnitude is introduced to a single combustion chamber, e.g., CC1, by activating the appropriate heat exchanger controllers to operate the heat exchangers for combustion chamber CC1 in the corresponding supply line. In step 152, measure the corresponding CO emissions in the exhaust: CO1 (trim_1), CO2 (trim_1), ... COn (trim_1), and CO_Stack (trim_1), where trim_1 represents an adjustment, e.g., fuel spike, to the heat exchangers on combustor CC1. The fuel temperature magnitude change in step 150, may provide on the order of a 1 to 2% change in the overall fuel flow to the combustion chamber and should be such that it does not interfere with the regular combustion operation. In step 154, return the heat exchangers in combustion chamber CC1 to the initial settings and adjust the heat exchangers for combustor CC2. Repeat steps 150 to 154 for each of the combustion chambers CC2, CC3 ... CCn, where n is the total number of combustion chambers. Further, steps 150 to 154 may be repeated at different fuel loads for the gas turbine.

In step 156, develop a thermodynamic model that predicts the production of the CO emissions from a single combustion chamber. The model may be a relationship such as: CO_single_chamber=B exp (-m*fuel_flow_rate) where CO_single_chamber is the CO production rate from a single combustion chamber, and B and m are positive constants. The fuel flow rate as a function of CO emissions for a single chamber may be derived from the thermodynamic model. In addition, CO measured at the exhaust stack downstream can be computed from knowledge of the CO production at each combustion chamber. Accordingly, the CO emission levels sensed by sensors in the turbine exhaust can be correlated to the fuel flow rates to the individual combustion chambers.

From a knowledge of the fuel flow characteristics and a computational model of the gas fuel flow in the manifolds, determine the fuel temperature transfer function "g" e.g., fuel temperature (in each fuel line)=g (FV1, FV2,... FVn). FV1, FV2, ... FVn describes the heat q input to or removed from the fuel for combustion chamber CC1, CC2, CC3...CCn. From the measurements of the reference CO emissions, CO1 (ref), CO2 (ref), ... , COn (ref), CO_stack (ref) and the CO emissions measured upon introducing a known fuel trim in each of the combustion chambers, CO1 (trim), CO2 (trim) ... , COn (trim), CO_stack (trim), the thermodynamic transfer function CO_single_chamber, and the fuel temperature transfer function "g", the controller 50 can determine the magnitude of the change in the heat exchanger setting to adjust for the deviation of the fuel flow of any one combustion chamber from the average.

The use of mechanical tuning valves to even out temperature variation is expensive and can sometimes have issues actuating, and the driving linkages can often bind during operation of the valves. By regulating the fuel temperature using heat exchangers, the complexity of the fuel modulation may be simplified and the expense may be reduced. Also, the fuel modulation could be actively controlled, rather than passive as in the current mechanical system. This allows for self tuning and more controllability. Control of the fuel temperature may also help control the emissions and dynamics of the system better than the current mechanical system. The temperature controlled can-to-can tuning can not only provide for variation reduction, similar to the mechanical valves, but also provide fuel heating, which reduces the likelihood for having heavier molecules condense out of the gas stream.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A gas turbine (10), comprising:
a plurality of combustion chambers (14);
at least one fuel nozzle (16, 18, 20) for each of the combustion chambers;
at least one fuel line (34, 36, 38) for each fuel nozzle in each of the combustion chambers;
at least one heat exchanger (28, 30, 32) for each fuel line configured to adjust a temperature and an amount of a fuel flow to each fuel nozzle; and
a controller (50) configured to control each of the heat exchangers to reduce temperature variations amongst the combustion chambers.

2. The gas turbine of claim 1, further comprising a plurality of manifolds (22, 24, 26), wherein a plurality of fuel lines extend from each manifold to the fuel nozzles in each of the combustion chambers.

3. The gas turbine of claim 2, wherein the plurality of manifolds have different fuel capacities.

4. The gas turbine according to claim 2 or 3, wherein at least one of the manifolds of the plurality of manifolds is configured to provide purge gas to at least one fuel nozzle of each combustion chamber.

5. The gas turbine of any one of claims 1 to 4, further comprising a plurality of sensors (40, 52, 53, 54) for measuring a condition of exhaust gas from the plurality of combustion chambers.

6. The gas turbine of claim 5, wherein the plurality of sensors comprises a plurality of temperature sensors (40) configured to sense temperatures at different regions of an exhaust outlet of the turbine, and the controller (50) correlates the sensed exhaust temperatures to fuel flow to individual combustion chambers and controls the heat exchangers to modify a profile of exhaust gas temperatures.

7. The gas turbine of claim 6, wherein the controller (50) controls each heat exchanger (28,30,32) so that a temperature variation of each combustion chamber (14) from an average temperature sensed by the plurality of sensors (40) is about one percent or less.

8. The gas turbine of any one of claims 5 to 7, wherein the plurality of sensors (40) comprises at least one dynamic pressure sensor (52) for each combustion chamber (14), and the controller (50) correlates dynamic pressure oscillations to fuel flow to individual combustion chambers (14) and the controller (50) controls the heat exchangers (28,30,32) to reduce deviations in cold tones for individual combustion chambers (14) from an average cold tone of the turbine (10).

9. The gas turbine of claim 8, wherein the controller (50) is configured to adjust cold tone deviations in order from largest to smallest.

10. The gas turbine of any one of claims 5 to 7, wherein the plurality of sensors (40) comprises at least one emission sensor for each combustion chamber (14) for sensing emission levels at different regions of an exhaust outlet of the turbine (10), and the controller (50) correlates the emission levels to fuel flow to individual combustion chambers (14) and controls the heat exchangers (28,30,32) to modify a profile of emission levels.

11. The gas turbine of claim 10, wherein the controller (50) controls the heat exchangers to reduce an emission level variation of each combustion chamber (14) from an average emission level.

12. The gas turbine of any one of claims 6 to 11, wherein the plurality of sensors (40) comprise at least one of: CO sensors, unburned hydrocarbon sensors, and/or NOx sensors.

13. A method of controlling fuel flow to individual combustion chambers (14) of a gas turbine (10), comprising:
measuring exhaust gas temperatures and/or emission levels comprising CO, unburned hydrocarbon, and/or NOx emission levels at a plurality of exhaust regions of the gas turbine (10);
correlating one of the measured exhaust gas temperatures and/or emission levels to fuel flow to individual combustion chambers (14); and
adjusting a temperature and an amount of the fuel flow to each individual combustion chamber (14) to reduce a temperature level variation and/ or an emission level variation of each combustion chamber (14) from an average temperature level and/or an average emission level.

14. The method of claim 13, wherein the temperatures of the fuel flow to the individual combustion chambers (14) are adjusted so that a temperature variation of each combustion chamber (14) from an average temperature is one percent or less.
